# FASCICULE DE BREVET EUROPEEN

(11) **EP 1 350 672 B1**
(45) Date de publication et mention de la délivrance du brevet: **01.09.2004**
(21) Numéro de dépôt: 03290381.7
(22) Date de dépôt: 17.02.2003
(51) Int. Cl.: B60R 5/00

(54) **Cloison modulable pour espace intérieur, notamment de véhicule automobile**
Modulare Trennwand für den Innenraum, insbesondere eines Kraftfahrzeuges
Modular separation wall for an interior space, particularly for a motor vehicle

(30) Priorité: 08.03.2002 FR 0202962
(43) Date de publication de la demande: 08.10.2003
(73) Titulaire: Peugeot Citroen Automobiles SA, 92200 Neuilly sur Seine (FR)
(72) Inventeur: Rebel, Vincent, 75010 Paris (FR)
(74) Mandataire: Berger, Helmut

(56) Documents cités:
- DE-A- 3 625 666
- DE-U- 29 800 045

## Description

L'invention concerne en général l'aménagement d'espaces intérieurs, notamment de véhicules automobiles utilitaires.

Plus précisément, la présente invention concerne une cloison modulable pour espace intérieur, notamment de véhicule automobile utilitaire, cet espace intérieur comprenant une cabine et un espace de chargement séparé de la cabine par la cloison modulable, la cloison modulable comprenant un panneau fixe, une ouverture mettant en communication la cabine et l'espace de chargement, et un panneau mobile par rapport au panneau fixe entre une position d'obturation de l'ouverture et une position de dégagement dans laquelle l'ouverture n'est pas obturée. Le Document DE 3 625 666 A1 décrit une cloison avec une ouverture entre un espace de chargement et une cabine d'un véhicule automobile. L'ouverture est obturé par un panneau qu'on peux enlever.

Des cloisons de ce type sont connues de l'art antérieur. Certains véhicules automobiles vendus sur le marché comprennent des trappes pivotantes permettant de mettre en communication le coffre et la cabine, par exemple pour pouvoir loger des skis.

Certains véhicules utilitaires comprennent des cloisons dites d'arrêt de charge transversales entre la cabine avant, équipée du siège conducteur et du siège ou des sièges passager, et l'espace de chargement arrière. Le panneau fixe correspond à la partie de la cloison située derrière le siège conducteur et le panneau mobile à la partie de la cloison située derrière le siège passager. Le siège passager est escamotable et peut se replier pour dégager un espace de chargement supplémentaire. Quand le siège passager est replié, le panneau mobile peut pivoter par rapport au panneau fixe autour d'un axe vertical, vers une position longitudinale. Le panneau mobile se trouve alors sensiblement entre les deux sièges avant, dans une position perpendiculaire au panneau fixe. Il sépare le siège conducteur du siège passager et offre ainsi une protection latérale au siège conducteur. Il est ainsi possible de disposer des charges longues dans l'espace de chargement, en profitant de l'espace supplémentaire gagné en repliant le siège passager. Les panneaux fixe et mobile arrivent à mi-hauteur de l'espace intérieur du véhicule.

Ce type de cloison modulable présente des défauts. L'utilisateur n'a pas accès facilement à l'espace de chargement à partir de la cabine. Quelle que soit la position du panneau mobile, il doit toujours se pencher au-dessus de la cloison pour saisir un objet disposé sur le plancher de l'espace de chargement.

Par ailleurs, il n'est pas possible d'interdire l'accès à l'espace de chargement à partir de la cabine, de façon à protéger les objets transportés contre le vol.

Dans ce contexte, un premier but de l'invention est de proposer une cloison d'arrêt de charge modulable, protégeant le conducteur et le ou les passagers, et permettant de transporter des charges longues ou d'accéder à l'espace de chargement à partir de la cabine quand le ou les sièges passagers sont repliés. Un autre but est de proposer un dispositif permettant de façon simple, quand l'utilisateur le souhaite, de condamner l'accès à l'espace de chargement à partir de la cabine.

A cette fin, la cloison modulable selon l'invention, par ailleurs conforme à la définition générique qu'en donne le préambule ci-dessus, est essentiellement caractérisée en ce que le panneau mobile est mobile en translation par rapport au panneau fixe.

Dans un mode de réalisation possible de l'invention, le panneau fixe comprend des première et seconde glissières dans lesquelles coulissent respectivement des premier et second bords opposés du panneau mobile.

Avantageusement, la première glissière et le panneau mobile peuvent présenter respectivement des premier et second orifices alignés quand le panneau mobile est en position d'obturation.

De préférence, la cloison modulable peut comprendre un dispositif de verrouillage sélectif du panneau mobile en position d'obturation, ce dispositif comprenant une lamelle rigidement lié au panneau fixe par une première extrémité, cette lamelle se prolongeant à une seconde extrémité opposée par un coude.

Par exemple, le dispositif de verrouillage peut comprendre une languette de préhension partiellement courbe solidaire de la seconde extrémité de la lamelle.

Avantageusement, la lamelle peut être mobile par flexion sous l'effet d'une traction sur la partie courbe de la languette de préhension, entre une position de verrouillage dans laquelle le coude est engagé dans les premier et second orifices, et une position de déverrouillage dans laquelle le coude est dégagé des premier et second orifices.

De préférence, les première et seconde glissières et le dispositif de verrouillage peuvent être disposées sur une face de la cloison modulable tournée vers l'espace de chargement et ne sont pas accessibles à partir de la cabine.

Par exemple, le panneau mobile peut porter sur une face tournée vers la cabine une poignée en saillie, cette poignée venant en butée contre un bord de l'ouverture quand le panneau mobile est dans sa position de dégagement.

Avantageusement, la cloison modulable peut être sensiblement verticale, les panneaux fixe et mobile étant sensiblement de même hauteur.

De préférence, la cloison modulable peut être au moins partiellement verticale, les panneaux fixe et mobile étant de hauteurs différentes.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une vue en perspective de la cloison modulable de l'invention à partir de l'espace de rangement, le panneau mobile étant en position d'obturation,
- la figure 2 est une vue identique à la figure 1, le panneau mobile étant en position de dégagement et un objet long traversant l'ouverture dégagée,
- la figure 3 est une vue éclatée des éléments permettant de verrouiller le panneau mobile de la cloison de la figure 1 en position d'obturation,
- la figure 4 est une vue en perspective illustrant le fonctionnement du dispositif de verrouillage de la figure 3,
- les figures 5a et 5b sont des vues en perspective illustrant deux fonctions possibles du dispositif de verrouillage de la figure 3, et
- la figure 6 est une vue en perspective de la cloison modulable de la figure 1 à partir de la cabine.

La cloison modulable 1 est destinée à l'aménagement d'un espace intérieur comprenant une cabine 11 et un espace de chargement 12 séparé de la cabine 11 par la dite cloison modulable 1.

Cette cloison modulable 1 comprend de manière connue un panneau fixe 20, une ouverture 30 mettant en communication la cabine 11 et l'espace de chargement 12, et un panneau 40 mobile par rapport au panneau fixe 20 entre une position d'obturation de l'ouverture 30 et une position de dégagement dans laquelle l'ouverture 30 n'est pas obturée.

On décrira ci-dessous un mode de réalisation de l'invention relatif à un véhicule utilitaire, dont la cabine 11, située à l'avant du véhicule, comprend un siège conducteur 13 et un siège passager disposé latéralement par rapport au siège conducteur 13. L'espace de chargement 12 est situé à l'arrière du véhicule, derrière les sièges conducteur et passager. La cabine 11 peut comprendre deux sièges passagers situés côte à côte, ou deux rangées de sièges passagers.

L'invention peut également s'appliquer à un véhicule de type berline, la cabine étant alors constituée par l'habitacle du véhicule.

L'avant et l'arrière sont définis relativement au sens de déplacement normal du véhicule.

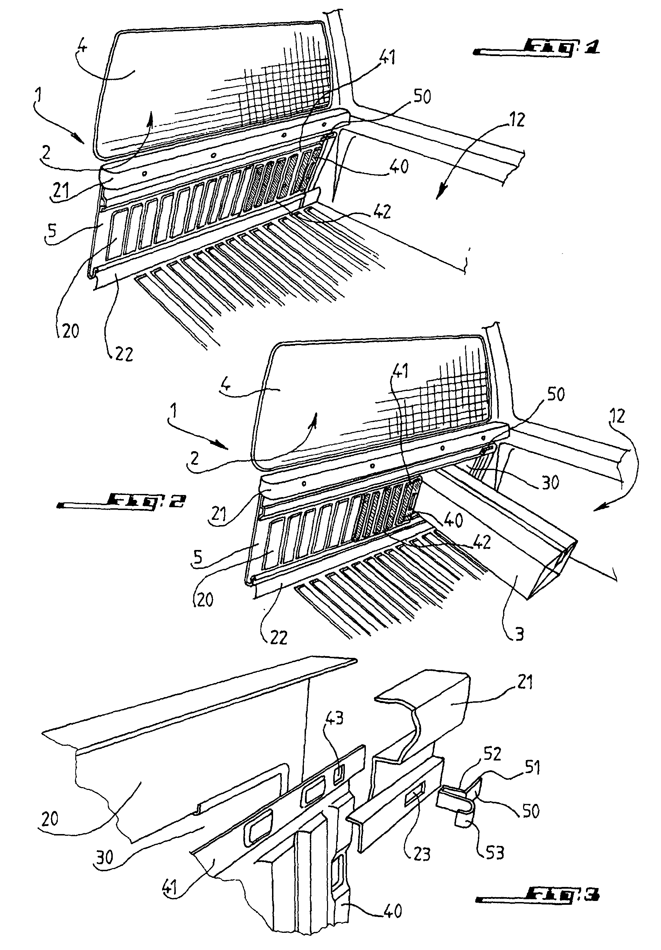

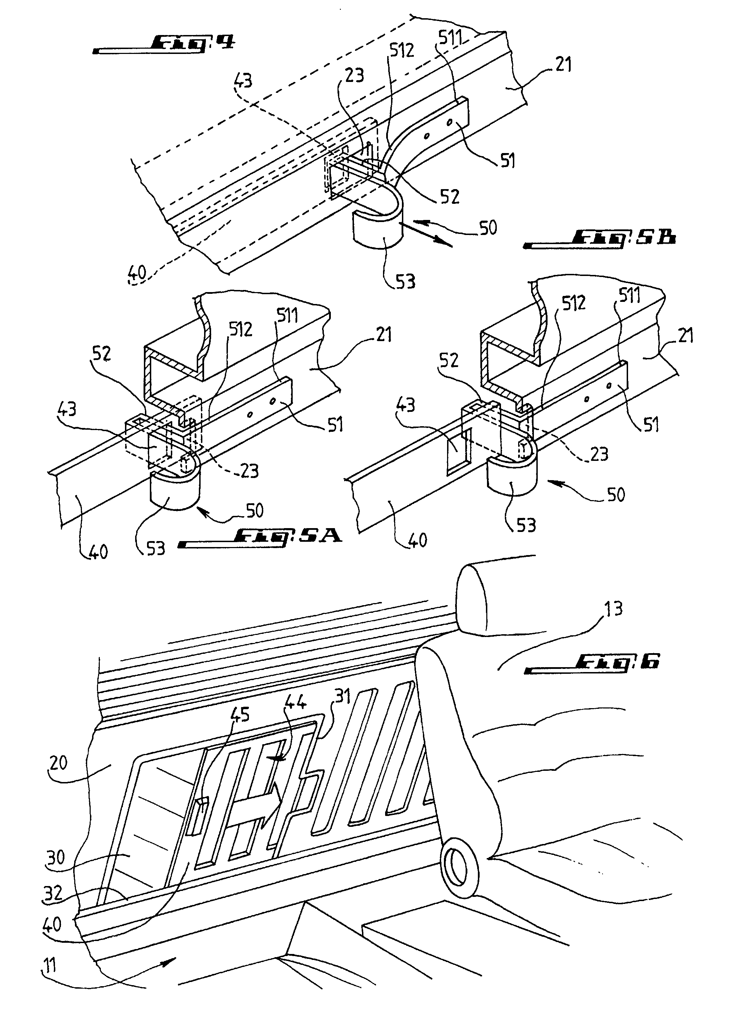

Selon le mode de réalisation de l'invention représenté sur les figures 1 à 6, la cloison modulable 1 est sensiblement verticale et transversale. On peut voir sur les figures 1 et 2 qu'elle épouse la forme de la section transversale de l'espace intérieur du véhicule, constituant ainsi une séparation complète entre la cabine 11 et l'espace de chargement 12.

La cloison modulable 1 peut également être verticale dans une partie supérieure, et comprendre une partie inférieure légèrement inclinée vers l'avant du véhicule pour épouser la forme des dossiers des sièges conducteur et passagers.

Comme on peut le voir sur la figure 2, le panneau mobile 40 est mobile en translation par rapport au panneau fixe 20, suivant une direction latérale.

L'ouverture 30 ainsi libérée est sensiblement rectangulaire, et située derrière le siège passager. Ce siège passager est amovible ou escamotable, de façon à dégager un espace libre dans le prolongement de l'ouverture 30.

Quand le siège passager est dégagé, il est possible de disposer un objet 3 de forme allongée à travers l'ouverture 30.

Une extrémité de l'objet de forme allongée 3 est alors disposée dans l'espace libéré par le siège passager, une extrémité opposée étant située dans l'espace de chargement 12.

Le panneau fixe comprend des première et seconde glissières 21 et 22 horizontales dans lesquelles coulissent respectivement des premier et second bords opposés 41 et 42 du panneau mobile 40.

Le panneau mobile 40 est sensiblement rectangulaire, les premier et second bords 41 et 42 constituant respectivement ses bords inférieur et supérieur.

L'ouverture 30 s'inscrit entièrement entre les première et seconde glissières 21 et 22.

Comme on peut le voir sur la figure 3, la première glissière 21 et le panneau mobile 40 présentent respectivement des premier et second orifices 23 et 43 alignés quand le panneau mobile 40 est en position d'obturation.

La cloison modulable 1 comprend un dispositif de verrouillage sélectif 50 de la cloison mobile 40 en position d'obturation. Ce dispositif 50 comprend une lamelle 51 rigidement lié au panneau fixe 20 par une première extrémité 511, cette lamelle 51 se prolongeant à une seconde extrémité 512 opposée par un coude 52.

La lamelle 51 est faite en métal ou dans un matériau synthétique. Elle est fixée à une extrémité latérale de la première glissière 21, par exemple par soudage ou rivetage.

Une languette de préhension 53, comprenant une partie partiellement courbe, est solidaire de la seconde extrémité 512 de la lamelle 51.

La lamelle 51 est disposée à proximité du premier orifice 23, de façon à ce que le coude 52 soit normalement engagé dans ce premier orifice 23.

Quand le panneau mobile 40 est dans sa position d'obturation, le coude 52 traverse également le second orifice 43, qui est aligné avec le premier orifice 23, verrouillant ainsi le panneau mobile 40 dans sa position d'obturation.

Comme on le voit sur la figure 4, le coude 52 peut être dégagé des premier et second orifices 23 et 43 en exerçant une traction, par exemple avec le doigt, sur la partie courbe de la languette de préhension 53, suivant la direction symbolisée par la flèche.

A cet effet, la lamelle 51 est mobile par flexion, entre une position de verrouillage dans laquelle le coude 52 est engagé dans les premier et second orifices 23 et 43, et une position de déverrouillage dans laquelle le coude 52 est dégagé des premier et second orifices 23 et 43.

La lamelle 51 est rappelée dans sa position de verrouillage par sa rigidité naturelle, une fois que la traction cesse de s'exercer sur la languette de préhension 53.

Quand la lamelle 51 est dans sa position de déverrouillage, le panneau mobile 40 est libre de coulisser latéralement, suivant la flèche de la figure 6, dégageant l'ouverture 30.

Si on fait ensuite coulisser le panneau mobile 40 en sens inverse, le coude 52 de la lamelle 51 peut servir de butée comme on le voit sur la figure 5b. La lamelle 51 est rappelée dans sa position de verrouillage et empêche le panneau mobile 40 de glisser vers l'extérieur au-delà de l'ouverture 30 voire même de s'échapper des glissières.

Les première et seconde glissières 21 et 22 sont fixées sur une face 2 de la cloison modulable 1 tournée vers l'espace de chargement 12. Le dispositif de verrouillage 50 n'est donc pas accessible à partir de la cabine 11.

Cette disposition avantageuse permet d'interdire l'accès à l'espace de chargement 12 à partir de la cabine 11, ce qui rend le vol d'objets disposés dans l'espace de chargement 12 plus difficile.

Le panneau mobile 40 ne peut être déverrouillé qu'à partir de l'espace de chargement 12. Le dispositif de verrouillage 50 est disposé sur un bord de la cloison modulable 1, de façon à être facilement accessible, par exemple en ouvrant une porte latérale arrière du véhicule.

Le panneau mobile 40 porte sur une face 44 tournée vers la cabine 11 une poignée 45 en saillie, visible sur la figure 6. Cette poignée 45 sert à un utilisateur, par exemple le conducteur du véhicule, pour faire coulisser le panneau mobile 40, une fois celui-ci déverrouillé. La poignée 45 sert également à limiter la course du panneau mobile 40, en venant en butée contre un bord vertical 31 de l'ouverture 30 quand le panneau mobile 40 atteint sa position de dégagement.

Un bord horizontal inférieur 32 de l'ouverture 30 est constitué d'une tôle roulée, de façon à faciliter le glissement des pièces de formes allongées 3 introduites à travers l'ouverture 30. Ce type de bord offre également une bonne résistance vis-à-vis du poids et du frottement exercé par les pièces 3, et n'est pas agressif vis-à-vis de celles-ci.

Les trois autres bords de l'ouverture 30 portent des joints en caoutchouc afin de protéger les pièces 3, qui ne risquent pas ainsi d'être rayées, griffées ou endommagées.

Dans le mode de réalisation de l'invention représenté sur les figures 1 à 6, la cloison modulable 1 comprend une partie supérieure grillagée 4 et une partie inférieure pleine 5 dans laquelle est ménagée l'ouverture 30. La hauteur du panneau mobile 40 est limitée à une fraction de la hauteur totale de la cloison modulable 1, et elle est inférieure à la hauteur du panneau fixe 20.

Dans un autre mode de réalisation de l'invention, non représenté, le panneau mobile 40 peut s'étendre sur toute la hauteur de la cloison modulable 1. Dans ce cas, la hauteur du panneau mobile 40 est égale à la hauteur du panneau fixe 20.

L'invention couvre d'autres variantes de réalisation de la cloison modulaire décrite ci-dessus. Cette cloison modulable peut par exemple ne pas s'étendre sur toute la hauteur de l'espace intérieur du véhicule mais seulement en partie basse de celui-ci.

La cloison modulable peut ne pas être entièrement transversale et comprendre des portions longitudinales ou obliques.

La partie supérieure grillagée de la cloison mobile peut être remplacée par une partie pleine ou une partie partiellement ou totalement vitrée.

Le panneau mobile peut coulisser verticalement, et non latéralement, par rapport au panneau fixe.

Le panneau mobile peut être lié au panneau fixe par d'autres types de liaison qu'une liaison glissière. On peut par exemple envisager une liaison à galets roulants dans un rail.

On conçoit donc bien que la cloison modulaire de l'invention permet de protéger à la fois les sièges du conducteur et du passager tout en offrant la possibilité de transporter des objets de formes allongées dans le véhicule quand le panneau mobile dégage l'ouverture et que le siège passager est escamoté. Le dispositif de verrouillage du panneau mobile est particulièrement simple et économique et permet de condamner l'accès à l'espace de rangement à partir de la cabine. La sécurité des objets disposés à l'arrière du véhicule est ainsi renforcée. Le conducteur de véhicule peut également accéder à l'espace de chargement directement à travers l'ouverture, à partir de la cabine, quand l'ouverture est dégagée.

## Revendications

1. Cloison modulable (1) pour espace intérieur, notamment de véhicule automobile utilitaire, cet espace intérieur comprenant une cabine (11) et un espace de chargement (12) séparé de la cabine (11) par la cloison modulable (1), la cloison modulable (1) comprenant un panneau fixe (20), une ouverture (30) mettant en communication la cabine (11) et l'espace de chargement (12), et un panneau (40) mobile en translation par rapport au panneau fixe (20) entre une position d'obturation de l'ouverture (30) et une position de dégagement dans laquelle l'ouverture (30) n'est pas obturée, **caractérisée en ce qu'**elle comprend un dispositif de verrouillage (50) sélectif du panneau mobile (40) en position d'obturation, ce dispositif comprenant une lamelle (51) rigidement lié au panneau fixe (20) par une première extrémité (511), cette lamelle (51) se prolongeant à une seconde extrémité opposée (512) par un coude (52).

2. Cloison modulable suivant la revendication 1, **caractérisée en ce que** le panneau fixe (20) comprend des première et seconde glissières (21, 22) dans lesquelles coulissent respectivement des premier et second bords (41, 42) opposés du panneau mobile (40).

3. Cloison modulable suivant la revendication 2, **caractérisée en ce que** la première glissière (21) et le panneau mobile (40) présentent respectivement des premier et second orifices (23, 43) alignés quand le panneau mobile (40) est en position d'obturation.

4. Cloison modulable suivant l'une quelconque des revendications 1 à 3, **caractérisée en ce que** le dispositif de verrouillage (50) comprend une languette de préhension (53) partiellement courbe solidaire de la seconde extrémité (512) de la lamelle (51).

5. Cloison modulable suivant la revendication 4, **caractérisée en ce que** la lamelle (51) est mobile par flexion sous l'effet d'une traction sur la partie courbe de la languette de préhension (53), entre une position de verrouillage dans laquelle le coude (52) est engagé dans les premier et second orifices (23, 43), et une position de déverrouillage dans laquelle le coude (52) est dégagé des premier et second orifices (23, 43).

6. Cloison modulable suivant l'une quelconque des revendications précédentes en combinaison avec la revendication 2, **caractérisée en ce que** les première et seconde glissières (21, 22) et le dispositif de verrouillage (50) sont disposées sur une face (2) de la cloison modulable (1) tournée vers l'espace de chargement (12) et ne sont pas accessibles à partir de la cabine (11).

7. Cloison modulable suivant l'une quelconque des revendications 1 à 6, **caractérisée en ce que** le panneau mobile (40) porte sur une face (44) tournée vers la cabine (11) une poignée (45) en saillie, cette poignée (45) venant en butée contre un bord (31) de l'ouverture (30) quand le panneau mobile (40) est dans sa position de dégagement.

8. Cloison modulable suivant l'une quelconque des revendications 1 à 7, **caractérisée en ce qu'**elle est sensiblement verticale, les panneaux fixe et mobile (20, 40) étant sensiblement de même hauteur.

9. Cloison modulable suivant l'une quelconque des revendications 1 à 7, **caractérisée en ce qu'**elle est au moins partiellement verticale, les panneaux fixe et mobile (20, 40) étant de hauteurs différentes.

## Patentansprüche

1. Variable Trennwand (1) für einen Innenraum, insbesondere für ein Nutzkraftfahrzeug, wobei dieser Innenraum eine Kabine (11) und einen Laderaum (12) enthält, der von der Kabine (11) durch die variable Trennwand (1) getrennt ist, wobei die variable Trennwand (1) ein festes Wandteil (20), eine die Kabine (11) und den Laderaum (12) verbindende Öffnung (30) und ein Wandteil (40) enthält, das zum festen Wandteil (20) zwischen einer Stellung zum Verschließen der Öffnung (30) und einer Freigabestellung verschiebbar ist, in welcher die Öffnung (30) nicht verschlossen ist, **dadurch gekennzeichnet, dass** sie eine Vorrichtung (50) zur selektiven Verriegelung des verschiebbaren Wandteils (40) in Schließstellung enthält, wobei diese Vorrichtung eine Zunge (51) enthält, die über ein erstes Ende (511) starr mit dem festen Wandteil (20) verbunden ist, wobei diese Zunge (51) sich an einem zweiten, entgegengesetzten Ende (512) über eine Kröpfung (52) fortsetzt.

2. Variable Trennwand nach Anspruch 1, **dadurch gekennzeichnet, dass** das feste Wandteil (20) eine erste und eine zweite Gleitführung (21, 22) enthält, in denen ein erster bzw. ein zweiter Rand (41, 42) des verschiebbaren Wandteils (40) einander gegenüberliegend gleiten.

3. Variable Trennwand nach Anspruch 2, **dadurch gekennzeichnet, dass** die erste Gleitführung (21) und das verschiebbare Wandteil (40) eine erste bzw. eine zweite Aussparung (23, 43) aufweisen, die zueinander ausgerichtet sind, wenn das verschiebbare Wandteil (40) in Schließstellung ist.

4. Variable Trennwand nach einem der Ansprüche 1 bis 3, **dadurch gekennzeichnet, dass** die Verriegelungsvorrichtung (50) eine Greiflasche (53) enthält, die teilweise umgebogen und fest mit dem zweiten Ende (512) der Zunge (51) verbunden ist.

5. Variable Trennwand nach Anspruch 4, **dadurch gekennzeichnet, dass** die Zunge (51) unter der Wirkung einer Zugkraft auf den umgebogenen Bereich der Greiflasche (53) biegebeweglich ist, und zwar zwischen einer Verriegelungsstellung, in der die Kröpfung (52) in die erste und die zweite Aussparung (23, 43) eingreift, und einer Entriegelungsstellung, in der die Kröpfung (52) von der ersten und der zweiten Aussparung (23, 43) freigegeben ist.

6. Variable Trennwand nach einem der vorangehenden Ansprüche in Kombination mit Anspruch 2, **dadurch gekennzeichnet, dass** die erste und die zweite Gleitführung (21, 22) und die Verriegelungsvorrichtung (50) an einer dem Laderaum (12) zugewandten Seite (2) der variablen Trennwand (1) angeordnet und von der Kabine (11) aus nicht zugänglich sind.

7. Variable Trennwand nach einem der Ansprüche 1 bis 6, **dadurch gekennzeichnet, dass** das verschiebbare Wandteil (40) an einer der Kabine (11) zugewandten Seite (44) einen vorstehenden Griff (45) enthält, wobei dieser Griff (45) an einen Rand (31) der Öffnung (30) in Anschlag gelangt, wenn das verschiebbare Wandteil (40) sich in seiner Freigabestellung befindet.

8. Variable Trennwand nach einem der Ansprüche 1 bis 7, **dadurch gekennzeichnet, dass** sie im wesentlichen senkrecht verläuft, wobei das feste und das verschiebbare Wandteil (20, 40) im wesentlichen gleich hoch sind.

9. Variable Trennwand nach einem der Ansprüche 1 bis 7, **dadurch gekennzeichnet, dass** sie zumindest teilweise senkrecht verläuft, wobei das feste und das verschiebbare Wandteil (20, 40) unterschiedlich hoch sind.

## Claims

1. Modular separation wall (1) for an interior space, particularly for a utility motor vehicle, this interior space comprising a cabin (11) and a loading space (12), which is separated from the cabin (11) by the modular separation wall (1), the modular separation wall (1) comprising a fixed panel (20), an opening (30) for communication between the cabin (11) and the loading space (12) and a mobile panel (40) for transfer of the fixed panel (20) between a position sealing the opening (30) and a loading position, in which the opening (30) is not sealed, **characterised by** the fact that this comprises a selective locking device (50) for the mobile panel (40) in the sealing position, this device comprising a strip (51) which is rigidly connected to the fixed panel (20) by one end (511), this strip (51) extending to a second opposite end (512) by an elbow (52).

2. Modular separation wall according to claim 1, **characterised by** the fact that the fixed panel (20) comprises first and second runners (21, 22) into which the first and second edges (42, 24) respectively, which are opposite the mobile panel (40), slide.

3. Modular separation wall according to claim 2, **characterised by** the fact that the first runner (21) and the mobile panel (40) have first and second holes (23, 24) respectively, which are aligned with the mobile panel (40) in the sealed position.

4. Modular separation wall according to any of claims 1 to 3, **characterised by** the fact that the locking device (50) comprises a partly curved prehension tongue (53), which is integral with the second end (512) of the strip (51).

5. Modular separation wall according to claim 4, **characterised by** the fact that the strip (51) can be moved by bending under the influence of traction on the curved part of the prehension tongue (53) between a locking position, in which the elbow (52) is engaged in the first and second holes (23, 43), and an unlocking position, in which the elbow (52) is disengaged from the first and second holes (23, 43).

6. Modular separation wall according to any of the previous claims together with claim 2, **characterised by** the fact that the first and second runners (21, 22) and the locking device (50) are arranged on a face (2) of the modular separation wall (1) which is turned towards the loading space (12) and are not accessible from the cabin (11).

7. Modular separation wall according to one of claims 1 to 6 **characterised by** the fact that on a face (44) turned towards the cabin (11) the mobile panel (40) has a handle (45) jutting out, this handle (45) coming to abut against an edge (31) of the opening (30) when the mobile panel (40) is in its disengaged position.

8. Modular separation wall according to any of claims 1 to 7, **characterised by** the fact that it is more or less vertical, the fixed and mobile panels (20, 40) being more or less the same height.

9. Modular separation wall according to any of claims 1 to 7, **characterised by** the fact that it is at least partly vertical, the fixed and mobile panels (20, 40) being different heights.
